# EUROPEAN PATENT SPECIFICATION

(11) **EP 2 248 306 B1**
(45) Date of publication and mention of the grant of the patent: **01.03.2017**
(21) Application number: 08869671.1
(22) Date of filing: 22.12.2008
(51) Int. Cl.: H04L 12/28, H04L 29/08, H04L 29/06

(54) **UNIFIED COMMUNICATIONS SYSTEMS AND METHODS**
EINHEITLICHE KOMMUNIKATIONSSYSTEME UND -VERFAHREN
SYSTÈMES DE COMMUNICATIONS UNIFIÉS ET PROCÉDÉS

(30) Priority: 21.12.2007 US 16124
(43) Date of publication of application: 10.11.2010
(73) Proprietor: Apple Inc., Cupertino, CA 95014 (US)
(72) Inventor: ALGIE, Glenn, Ottawa Ontario K1V 7H9 (CA); AKHTAR, Haseeb, Garland TX 75044 (US); LEE, Andy, Ottawa Ontario K2G6B3 (CA)
(74) Representative: Lang, Johannes
(86) International application number: PCT/IB2008/003601
(87) International publication number: WO 2009/087457

(56) References cited:
- WO-A-2007/036884
- US-A1- 2005 114 491
- US-A1- 2006 143 179

## Description

### CROSS-REFERENCE TO RELATED APPLICATION

This application claims priority under 35 USC 119(e) to United States Provisional Application Serial No. 61/016,124 filed on December 21, 2007, and which is incorporated herein by reference.

### TECHNICAL FIELD

The present invention relates generally to communication systems and, more particularly to the remote access of content through a service provider.

### BACKGROUND

The ability to store and playback digital video has led to an increased demand for personal video products. Digital video devices are capable of obtaining video and storing it in a variety of formats. This provides a convenient way to store and playback media on a single device.

One of the problems with conventional storage and playback of digital video has been that providing digital video to other devices has been difficult, as no single programmable interface exists that allows for dissimilar devices to display content in a single format or bitrate. For instance, a first media device may be capable of displaying and storing video at a first bitrate and data format while a second device may be capable of a display video with a second bitrate and second data format. Therefore, content from the first device will need to be prepared, or transcoded, prior to delivery on the second device.

In addition, the first device and the second device may not be directly connected. This compounds the problem of providing content to the second device from the first device, as there may be limited bandwidth available to the second device. Therefore, the bandwidth required to display the content may need to be adjusted prior to transmission to the second device.

Moreover, as content has started to shift from being passive to allowing active user interaction, the need for a unified communications application programmable interface has increased. With the advent of interactive media, the ability to dynamically program media devices and user interfaces has become more important.
US 2007/036884 discloses a service gateway that controls devices. A service registry is adapted to register device services, whereby each device service represents a device connected to the gateway and has a class name and at least one registered property. The registry responds to queries, made by applications, to access registered device services. A policy enforcement mechanism restricts access of an application to a device service on the basis of policy data which specifies at least one registered property of a device service. Properties can include a per-device identifier; device manufacturer; device model name; device feature; device location; device domain. Policy enforcement can use AND/OR combinations of properties. Policy data can be generated remotely from the service gateway and downloaded to the service gateway. The service gateway can conform to the OSGi framework.
US2006/143179 discloses a client device of a communication system, having for example, a processor programmed to include a device management tree wherein the processor is operative to receive security policy information, such as that associated with a non-server entity, such as an application on the device, for example, and updates the device management tree with the received security policy information. The device management tree is then accessed in response to a security policy access request, such as from a application or other non-server entity during runtime of the wireless client device. As such, not only does the device management tree include external security policy subjects, such as server identities, but different internal security policy subjects are also used to configure a device management tree with suitable security policy enforcement information.

Accordingly, there is needed an effective application programmable interface that delivers content to users.

### SUMMARY

The invention is defined by the independent claims.

In accordance with one embodiment, systems and methods for providing digital content are disclosed, which include registering an application to be used during a session, loading policies to be used during the session, and identifying hardware features to be used during the session. These systems and methods also include steering data to be used during a session and presenting data to an end device during the session. The content is delivered from a first device to a second device according to the policies and hardware features that are available during the session.

In accordance with another embodiment, a method of delivering content to a device is shown that includes receiving a request for content from a requesting device, accessing the requested content, and verifying the access privileges of the requesting device to view the content. This method also includes preparing the content for transmission, providing the content to the requesting device, and allowing the requesting device to interact with the content through a unified media application programmable interface.

In yet another embodiment, a system for providing content is disclosed that includes a content providing device and a content requesting device. In this embodiment, the content requesting device requests content from the content providing device. In addition, an interface is disclosed that connects the content providing device and the content requesting device. This interface may include a unified media application programmable interface.

Other technical features may be readily apparent to one skilled in the art from the following figures, descriptions, and claims.

### BRIEF DESCRIPTION OF THE DRAWINGS

For a more complete understanding of the present disclosure, and the advantages thereof, reference is now made to the following descriptions taken in conjunction with the accompanying drawings, wherein like numbers designate like objects, and in which:
FIGURE 1 depicts a high level diagram of the Unified Communications System;
FIGURE 2 is a block diagram of a system using a universal media connection advanced programmable interface (API);
FIGURE 3 is a block diagram of the contents of the universal media connection API;
FIGURE 4 is a flowchart of one method of establishing a media session according to the disclosed systems and methods;
FIGURE 5 is a flowchart of one method of providing content to a client according to the disclosed systems and methods; and
FIGURE 6 depicts a general purpose-computing device.

### DETAILED DESCRIPTION

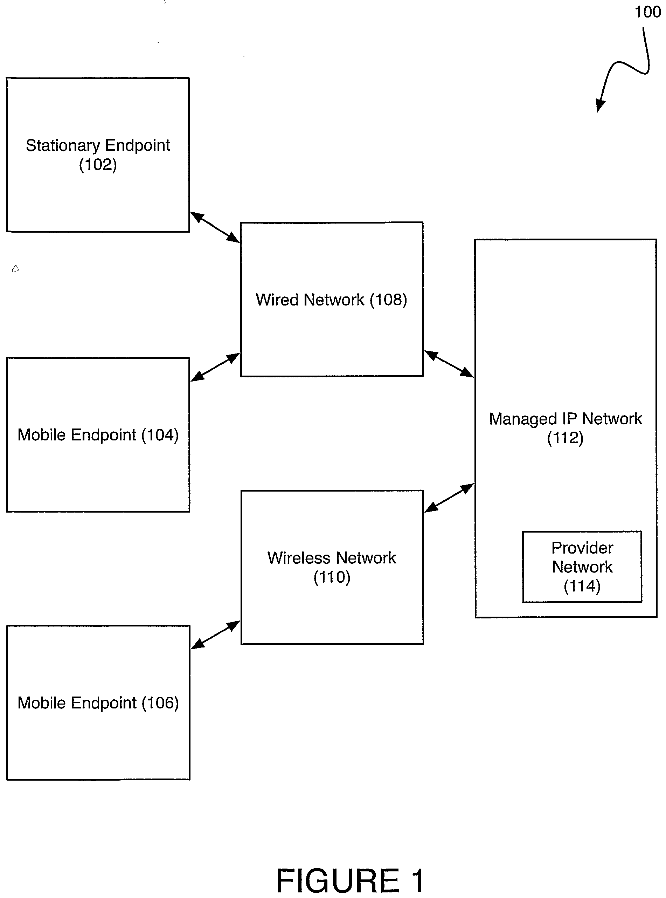

FIGURE 1 illustrates an example unified communications network architecture or system 100 in accordance with the present disclosure. The system 100 shown in FIGURE 1 is for illustration purposes only. Other embodiments of the system 100 may be used without departing from the scope of this disclosure. Reference to "standards" in the following text is meant to encompass existing and future versions of the referenced standards, as well as standards encompassing the principles of the subject matter disclosed and claimed herein.

In FIGURE 1, a system 100 is shown comprising endpoints 102, 104, 106, networks 108, 110 and a managed IP network 112 with a provider network 114. In this example, the stationary endpoint 102 and mobile endpoint 104 are connected to the wired network 108. The cellular endpoint 106 is connected to the wireless network 110. Both the wired network 108 and the wireless network 110 are connected to a managed IP network 112. In order to overcome the problems associated with sharing content, such as digital video, the present disclosure contemplates a unified communications application programmable interface (API) that allows for the seamless linking of one or more of the endpoints with the managed IP network 112. In this way, the unified communications API allows for content to be shared among the elements within system 100 by applying various rules and content transformations. This unified communications API ensures the reliable transfer and display of content within system 100.

One of the innovative features of the unified communications API is that the provider network allows content to be accessed by a user from any location using the disclosed systems and methods. The presently disclosed systems and methods allow for authorized users to remotely access content stored in a carrier-grade data repository. Content can be in the form of multimedia content such as that downloaded from a subscriber service.

It is understood that in each endpoint, a "provider application portal" (PAP) may be provided from which the unified communications API may be executed. The PAP may be embodied as a software application loaded onto the endpoint and may comprise a number of different elements within the software based upon the type of deployment. The PAP allows for remote access of content through a carrier grade communications network.

Stationary endpoint 102 is a location that comprises a connection to wired network 108 through a physical connection at a static location. Examples of a physical connection include, but are not limited to, fiber optics, telephone lines, cable lines, or any other system or method of delivering network connectivity through a physical connection to the stationary endpoint 102. It is contemplated that a wireless connection may be used at stationary endpoint 102, such as a WiFi connection, that allows a plurality of devices at stationary endpoint 102 to be connected to wired network 108.

Examples of stationary devices located at stationary endpoint 102 may include, but are not limited to, home consumer devices (e.g., blue ray devices, home personal video recorders (PVRs)), home computers, home security devices, or any other device that may be located at stationary endpoint 102.

Mobile endpoint 104 is intended to refer to any location that has a connection to the wired network 108, but does not have a static set of devices connected to the mobile endpoint 104. For example, a notebook computer may connect to the managed IP network through the wired network 108, but the notebook computer will not necessarily be at the same location at all times. The mobile device can be similar to the stationary device, except that the location for which the mobile endpoint 104 will connect to the wired network 108 is subject to change.

Cellular endpoint 106 is intended to refer to an endpoint created when a mobile device connecting through a cellular network is connected to the wireless network 110. Examples of devices that may use a cellular endpoint include, but are not limited to, cell phones (including those with photographic, music, or messaging functionality, as well those including internet capability alone or in combination with any of the foregoing features and functionalies), mobile computer devices with a cellular modem, or any other device as known by one skilled in the art with a cellular modem.

Wireless network 110 may be any type of wireless network, including, but not limited to, wireless local area network (WLAN) cards, radio transceiver cards such as code division multiple access (CDMA) and/or global system for mobile communications (GSM) radio transceiver cards, and other well-known network devices.

Managed IP network 112 is intended to refer to the backend of the network that comprises a provider network 114 with a provider server. The provider server will reside in the service provider (SP) network comprising content that can be distributed to one or more users. The provider network 114 may also function as a gateway for services enabled by the unified communications API, such as the purchasing of goods or services made through the unified communications API.

The PAP has a plurality of different functions that are enabled through the unified communications API. These functions include, but are not limited to, the application register function, session policy function, session steer function, session present function, and the session Digital Living Network Alliance (DNLA) function.

The application register function allows the user to register with the service provider for any service offered. For instance, the application register function may allow the user to register for a video streaming function. In addition, the application register function may allow the user to create an account from which the user may purchase goods or services, including, but not limited to digital video, directly from a service provider. These purchases may be made available to any device that is connected to system 100 and has the PAP installed.

The session policy function allows the service provider to authenticate and authorize the user based on the user's subscription profile. This function allows the user to have secure credential to access consumer electronic devices at home. This serves to both authenticate the user to the provider network 114 as well as to authenticate the user to the user's consumer electronic (CE) devices located at any one of the endpoints within system 100.

Another one of the features of the unified communications API is the ability to dynamically configure the hardware of devices with the PAP in system 100. For instance, the session buttons function allows for the dynamic configuration of hardware options by the user based upon the applications. In addition, these session buttons allow for session disposition such as receive, ignore or reroute the call, join into a chat session, and up/download content to/from network. The use of the unified communications API allows for a plurality of functions (e.g., streaming video while simultaneously interacting in a video conference) to be preformed through a dynamic interface through dissimilar devices and dissimilar network connections.

The session steer allows the service provider to steer the content between end devices or between an end device and an network storage. One example of this network storage is a digital locker stored in provider network 114. The "digital locker" is a secure storage device that affords a level of security by allowing the backend server to manage user rights and other security features.

The session presentence function allows the content data to be sent to the client using device specific parameters, such as a specific codec, format, throughput, bitrate, quality of service (QoS) parameters, as well as other information needed to deliver content to an end user device.

The session DLNA Proxy allows any consumer electronic device (such as a media storage, surveillance camera, etc.) at home to be accessible - via DLNA (Digital Living Network Alliance) proxy function - by the user.

It is expressly understood that the presently disclosed systems and methods allow for users to be provided with a number of unique abilities. For instance, the presently disclosed systems and methods allow for access to user multimedia content, such as personal video stored in a home computer, live content from the cable/satellite feed to the home or personal/commercial content stored at a digital locker within the network, from a mobile or a nomadic device (such as a laptop PC connected to the SP network from a hotel and/or WiFi hotspot). In addition, the use of the presently disclosed systems allows for a user to access, store, and manage any personal and/or commercial multimedia content to/from a digital locker that resides in the service provider's network. Finally, the presently disclosed systems and methods allow the user to access a unified communication service in the CE (consumer equipment) devices (e.g., TV screen, laptop/PC screen, camera, etc.).

An example of this unified service is one that permits a user to receive/ignore/reroute a phone call from his/her TV screen while watching a show. Having a pop-up window in the laptop/PC screen with the calling name ID is another example of a unified communication service. Yet anther advantage is that the presently disclosed systems allow the user to engage in a social networking event from the CE device, such as, discuss the current TV show within the friends listed in the 'facebook' or 'myspace', or participate in live interactive voting (similar to voting for a contestant in a "reality" television program).

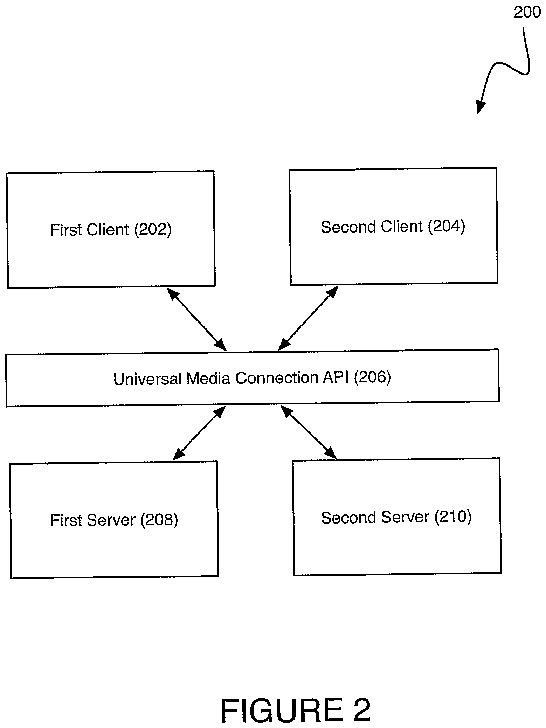

FIGURE 2 is an illustration 200 of the location of the API used by the unified communications system. In this example, a first client 202 and a second client 204 are connected to a first server 208 and a second server 210 through a universal communications API 206. The first and second clients 202 and 204 may be any device capable of display, recording, providing, storing, or otherwise sharing media. Examples of first and second clients 202 and 204 include, but are not limited to consumer electronic devices (digital video devices), home computers, personal video recorders, mobile telephones, or any other device consistent with the presently disclosed systems and methods.

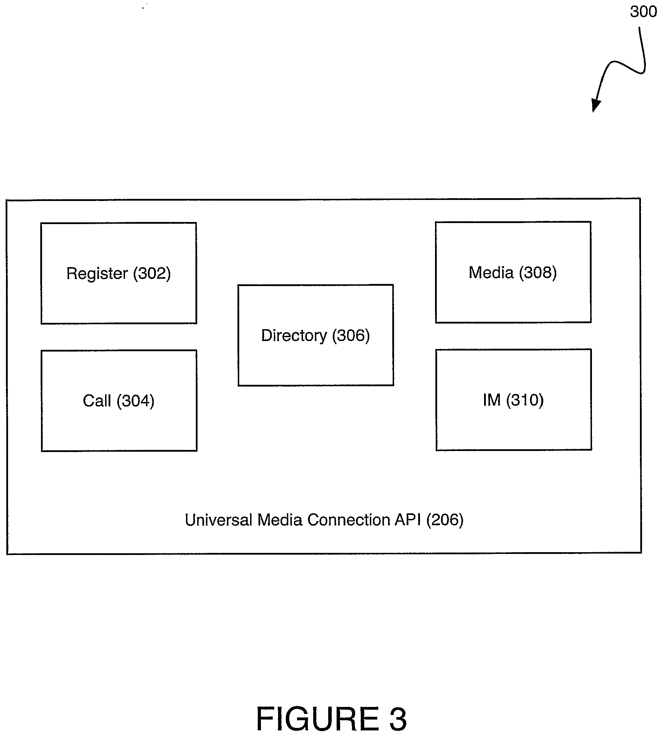

FIGURE 3 is a diagram of the presently disclosed API. Within API 206, a register function 302, a call function 304, a directory function 306, media function 308, an instant message function 310, and a presence function 312 are shown. Each of these functions corresponds to the functions described above. It is expressly understood that any number of other functions may be present within the API System consistent with the presently disclosed systems and methods.

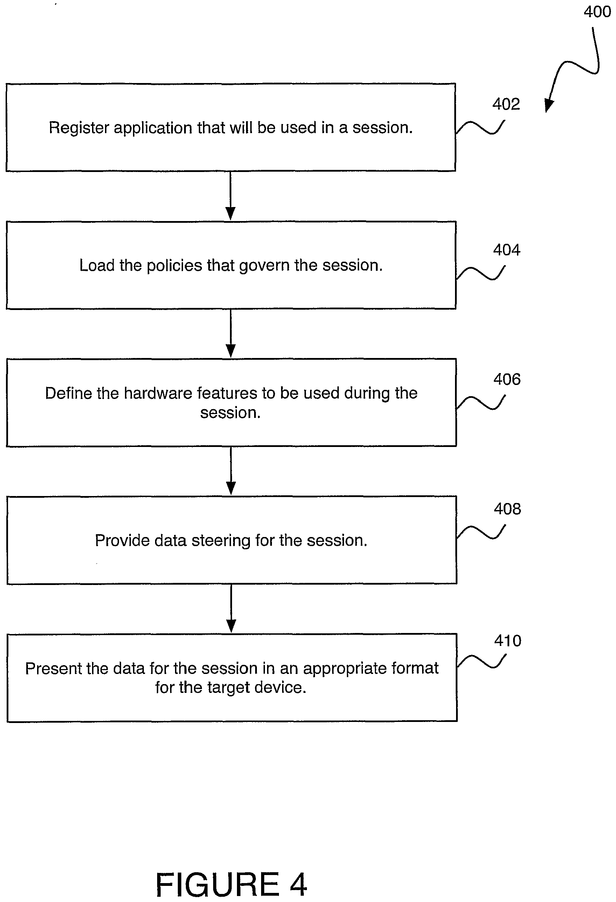

FIGURE 4 is a flowchart 400 of one method of implementing the disclosed systems and methods. In block 402, an application is registered that will be used during a session. In block 404, the policies that will be used to govern the session are loaded. In block 406, the hardware features that will be used during the session are identified. In block 408, data steering for the session is available. In block 410, data is presented to the user in the appropriate format.

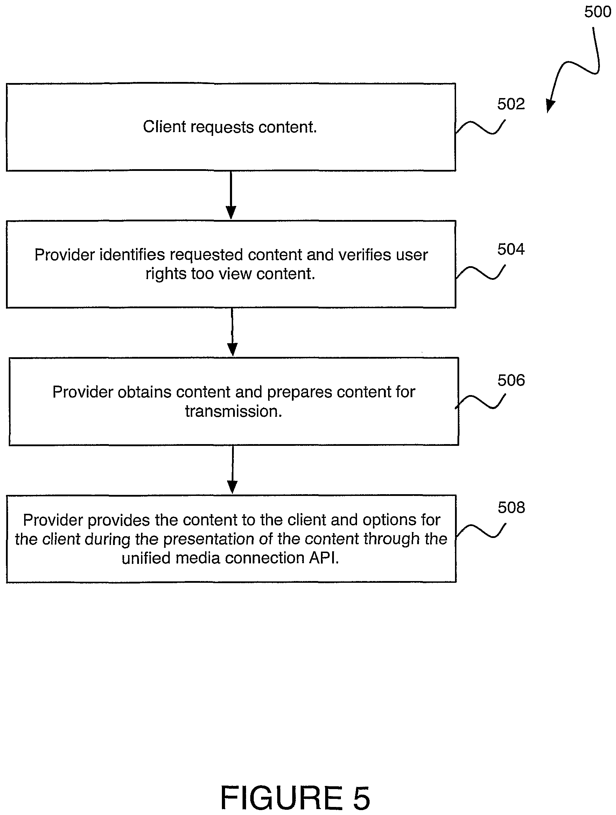

FIGURE 5 is a flowchart 400 of the presentation session to a user. In block 502, the client requests content. In block 504, the provider identifies the requested content and verifies the user rights to view the content. In block 506, the provider obtains the content and prepares the content for transmission. In block 508, the provider provides the content to the client and options for the client during the presentation of the content through the unified media connection API.

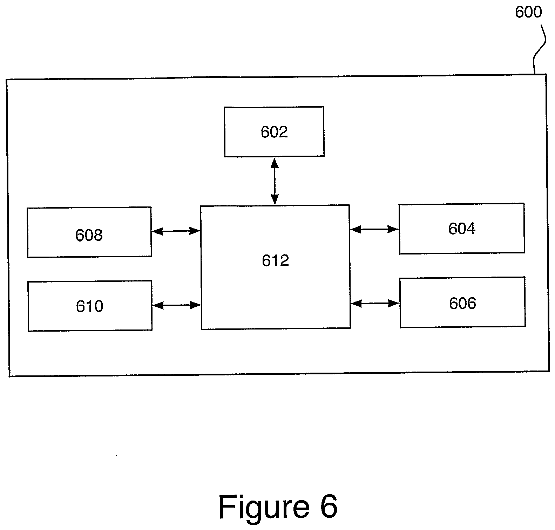

Any element of the disclosed system, including devices at endpoints 102, 104 and 106, described above may be implemented on any general-purpose computer 600 with sufficient processing power, memory resources, and network throughput capability to handle the necessary workload placed upon it. FIGURE 6 illustrates a typical, general-purpose computer system suitable for implementing one or more embodiments disclosed herein. The general-purpose computer 600 includes a processor 612 (which may be referred to as a central processor unit or CPU) that is in communication with memory devices including secondary storage 602, read only memory (ROM) 604, random access memory (RAM) 606, input/output (I/O) 608 devices, and network connectivity devices 610. The processor may be implemented as one or more CPU chips.

The secondary storage 602 is typically comprised of one or more disk drives or tape drives and is used for non-volatile storage of data and as an over-flow data storage device if RAM 606 is not large enough to hold all working data. Secondary storage 602 may be used to store programs that are loaded into RAM 606 when such programs are selected for execution. The ROM 604 is used to store instructions and perhaps data that are read during program execution. ROM 604 is a non-volatile memory device that typically has a small memory capacity relative to the larger memory capacity of secondary storage. The RAM 606 is used to store volatile data and perhaps to store instructions. Access to both ROM 604 and RAM 606 is typically faster than to secondary storage 602.

I/O 608 devices may include printers, video monitors, liquid crystal displays (LCDs), touch screen displays, keyboards, keypads, switches, dials, mice, track balls, voice recognizers, card readers, paper tape readers, or other well-known input devices. The network connectivity devices 392 may take the form of modems, modem banks, Ethernet cards, universal serial bus (USB) interface cards, serial interfaces, token ring cards, fiber distributed data interface (FDDI) cards, wireless local area network (WLAN) cards, radio transceiver cards (such as code division multiple access (CDMA) and/or global system for mobile communications (GSM) radio transceiver cards), and other well-known network devices. These network connectivity devices 610 may enable the processor 612 to communicate with an Internet or one or more intranets. With such a network connection, it is contemplated that the processor 612 might receive information from the network, or might output information to the network in the course of performing the above-described method steps. Such information, which is often represented as a sequence of instructions to be executed using processor 612, may be received from and outputted to the network, for example, in the form of a computer data signal embodied in a carrier wave.

Such information, which may include data or instructions to be executed using processor 612 for example, may be received from and outputted to the network, for example, in the form of a computer data baseband signal or signal embodied in a carrier wave. The baseband signal or signal embodied in the carrier wave generated by the network connectivity devices 610 may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 612 executes instructions, codes, computer programs, scripts that it accesses from hard disk, floppy disk, optical disk (these various disk based systems may all be considered secondary storage 602), ROM 604, RAM 606, or the network connectivity devices 610.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In some embodiments, some or all of the functions or processes of the one or more of the devices are implemented or supported by a computer program that is formed from computer readable program code and that is embodied in a computer readable medium. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of this disclosure, as defined by the following claims.

## Claims

1. A method of digital content presentation, comprising:
receiving a request (502) for content from a requesting device registering (402) an application to be used during a session;
loading policies (404) to be used during the session;
identifying (406) hardware features to be used during the session;
identifying (504) data to be used during a session wherein the data comprises the requested content;
accessing (506) the requested content;
presenting (410; 508) data to the requesting device during the session, wherein content is delivered from a content providing device to the requesting device according to the policies and hardware features that are available during the session, and
allowing the requesting device to interact with the content through a unified media application programmable interface.

2. The method of claim 1, wherein the hardware features to be used during the session include the hardware interface of the requesting device.

3. The method of claim 1 or 2, further comprising accessing the digital content from a digital locker.

4. The method of claim 1, 2 or 3, wherein the policies to be used during the session comprise security policies.

5. The method of any previous claim, wherein the data is steered over a wireless network (110), or wherein the data is transcoded prior to delivery over the wireless network (110).

6. The method of any previous claim, wherein the content is digital video.

7. The method of any previous claim, further comprising:
verifying (504) the access privileges of the requesting device to view the content;
preparing (506) the content for transmission;
providing (508) the content to the requesting device.

8. The method of claim 7, wherein the interaction comprises sending and receiving instant messages, or wherein the interaction comprises purchasing goods or services through the unified media application programmable interface, or wherein the interaction comprises configuring the user interface of the requesting device.

9. The method of claim 7 or 8, wherein the preparation of content comprises altering the bandwidth requirements of the content.

10. The method of claim 7, 8 or 9, wherein the content is stored in a digital locker, or wherein the content is stored in a consumer electronic device.

11. The method of claim 7, 8, 9 or 10, further comprising allowing a proxy server to provide content to the requesting device.

12. The method of claim 7, 8, 9, 10 or 11 wherein the requesting device is a mobile telephone.

13. The method of claim 8, wherein the interaction comprises configuring the user interface of the requesting device.

14. The method of any previous claim, wherein the requesting device is a mobile telephone.

15. A system for providing content, comprising:
a content requesting device, wherein the content requesting device requests content from a content providing device; and
an interface (API) connecting the content providing device and the content requesting device, wherein the interface (API) comprises a unified media application programmable interface, the system being adapted to:
receive the request for content from the requesting device;
register an application to be used during a session;
load policies to be used during the session;
identifying hardware features to be used during the session;
identify data to be used during a session wherein the data comprises the requested content;
present data to the content requesting device during the session, wherein content is delivered from a content providing device to the content requesting device according to the policies and hardware features that are available during the session, and
allow the requesting device to interact with the content through the unified media application programmable interface.

## Patentansprüche

1. Verfahren einer Präsentation digitalen Contents, umfassend:
Empfangen einer Anfrage (502) nach Content von einer anfragenden Vorrichtung, die eine Anwendung registriert (402) zur Verwendung während einer Sitzung;
Laden von Richtlinien (englisch Policies) (404) zur Verwendung während der Sitzung;
Identifizieren (406) von Hardware-Merkmalen zur Verwendung während der Sitzung;
Identifizieren (504) von Daten zur Verwendung während einer Sitzung, wobei die
Daten den angefragten Content umfassen;
Zugreifen (506) auf den angefragten Content;
Präsentieren (410; 508) von Daten für die anfragende Vorrichtung während der Sitzung, wobei Content von einer Content-bereitstellenden Vorrichtung für die anfragende Vorrichtung bereitgestellt wird gemäß den Richtlinien und Hardware-Merkmalen, die während der Sitzung verfügbar sind,
und
Erlauben, dass die anfragende Vorrichtung mit dem Content durch eine vereinheitlichte programmierbare Medien-Anwendungs-Schnittstelle interagiert.

2. Verfahren nach Anspruch 1, wobei die Hardware-Merkmale zur Verwendung während der Sitzung die Hardware-Schnittstelle der anfragenden Vorrichtung beinhalten.

3. Verfahren nach Anspruch 1 oder 2, ferner umfassend ein Zugreifen auf den digitalen Content von einem digitalen Schließfach.

4. Verfahren nach Anspruch 1, 2 oder 3, wobei die Richtlinien zur Verwendung während der Sitzung Sicherheitsrichtlinien umfassen.

5. Verfahren nach einem der vorstehenden Ansprüche, wobei die Daten über ein drahtloses Netzwerk (110) gelenkt werden, oder wobei die Daten vor einer Auslieferung über das drahtlose Netzwerk (110) transkodiert werden.

6. Verfahren nach einem der vorstehenden Ansprüche, wobei der Content ein digitales Video ist.

7. Verfahren nach einem der vorstehenden Ansprüche, ferner umfassend:
Verifizieren (504) der Zugangsprivilegien der anfragenden Vorrichtung, den Content zu sichten;
Vorbereiten (506) des Contents für eine Übertragung;
Bereitstellen (508) des Contents für die anfragende Vorrichtung.

8. Verfahren nach Anspruch 7, wobei die Interaktion ein Senden und Empfangen von Instant Messages umfasst, oder wobei die Interaktion ein Kaufen von Gütern oder Dienste umfasst durch die vereinheitlichte programmierbare Medien-Anwendungs-Schnittstelle, oder wobei die Interaktion ein Konfigurieren der Benutzerschnittstelle der anfragenden Vorrichtung umfasst.

9. Verfahren nach Anspruch 7 oder 8, wobei die Vorbereitung des Contents ein Ändern der Bandbreitenanforderungen des Contents umfasst.

10. Verfahren nach Anspruch 7, 8 oder 9, wobei der Content in einem digitalen Schließfach gespeichert ist, oder wobei der Content in einer elektronischen Verbrauchervorrichtung gespeichert ist.

11. Verfahren nach Anspruch 7, 8, 9 oder 10, ferner umfassend ein Erlauben, dass ein Proxy-Server Content für die anfragende Vorrichtung bereitstellt.

12. Verfahren nach Anspruch 7, 8, 9, 10 oder 11, wobei die anfragende Vorrichtung ein Mobiltelefon ist.

13. Verfahren nach Anspruch 8, wobei die Interaktion ein Konfigurieren der Benutzerschnittstelle der anfragenden Vorrichtung umfasst.

14. Verfahren nach einem der vorstehenden Ansprüche, wobei die anfragende Vorrichtung ein Mobiltelefon ist.

15. System zum Bereitstellen von Content, umfassend:
eine Content-anfragende Vorrichtung, wobei die Content-anfragende Vorrichtung Content von einer Content-bereitstellenden Vorrichtung anfragt; und
eine Schnittstelle (API), die die Content-bereitstellende Vorrichtung und die Content-anfragende Vorrichtung verbindet, wobei die Schnittstelle (API) eine vereinheitlichte programmierbare Medien-Anwendungs-Schnittstelle umfasst, wobei das System angepasst ist zum:
Empfangen der Anfrage nach Content von der anfragenden Vorrichtung;
Registrieren einer Anwendung zur Verwendung während einer Sitzung;
Laden von Richtlinien zur Verwendung während der Sitzung;
Identifizieren von Hardware-Merkmalen zur Verwendung während der Sitzung;
Identifizieren von Daten zur Verwendung während einer Sitzung, wobei die Daten den angefragten Content umfassen;
Präsentieren von Daten für die Content-anfragende Vorrichtung während der Sitzung, wobei Content von einer Content-bereitstellenden Vorrichtung für die Content-anfragende Vorrichtung bereitgestellt wird gemäß den Richtlinien und Hardware-Merkmalen, die während der Sitzung verfügbar sind,
und
Erlauben, dass die anfragende Vorrichtung mit dem Content durch die programmierbare vereinheitlichte Medien-Anwendungs-Schnittstelle interagiert.

## Revendications

1. Procédé de présentation de contenu numérique, comprenant :
la réception d'une demande (502) de contenu d'un dispositif demandeur ;
l'enregistrement (402) d'une application à utiliser pendant une session ;
le chargement de politiques (404) à utiliser pendant la session ;
l'identification (406) de caractéristiques matérielles à utiliser pendant la session ;
l'identification (504) de données à utiliser pendant une session, les données comprenant le contenu demandé ;
l'accès (506) au contenu demandé ;
la présentation (410 ; 508) des données au dispositif demandeur pendant la session,
le contenu étant délivré d'un dispositif fournisseur de contenu au dispositif demandeur selon les politiques et caractéristiques matérielles qui sont disponibles pendant la session, et
l'autorisation donnée au dispositif demandeur d'interagir avec le contenu par le biais d'une interface programmable d'application de media unifiée.

2. Procédé selon la revendication 1, dans lequel les caractéristiques matérielles à utiliser pendant la session incluent l'interface matérielle du dispositif demandeur.

3. Procédé selon la revendication 1 ou 2, comprenant en outre l'accès au contenu numérique à partir d'un casier numérique.

4. Procédé selon la revendication 1, 2 ou 3, dans lequel les politiques à utiliser pendant la session comprennent des politiques de sécurité.

5. Procédé selon une quelconque revendication précédente, dans lequel les données sont conduites sur un réseau sans fil (110), ou dans lequel les données sont transcodées avant distribution sur le réseau sans fil (110).

6. Procédé selon une quelconque revendication précédente, dans lequel le contenu est une video numérique.

7. Procédé selon une quelconque revendication précédente, comprenant en outre :
la vérification (504) des privilèges d'accès du dispositif demandeur pour visualiser le contenu ;
la préparation (506) du contenu pour transmission ;
la délivrance (508) du contenu au dispositif demandeur.

8. Procédé selon la revendication 7, dans lequel l'interaction comprend l'envoi et la réception de messages instantanés, ou dans lequel l'interaction comprend l'achat de biens et de services par le biais de l'interface programmable d'application de media unifiée, ou dans lequel l'interaction comprend la configuration de l'interface utilisateur du dispositif demandeur.

9. Procédé selon la revendication 7 ou 8, dans lequel la préparation du contenu comprend la modification des besoins en bande passante du contenu.

10. Procédé selon la revendication 7, 8 ou 9, dans lequel le contenu est stocké dans un casier numérique, ou dans lequel le contenu est stocké dans un dispositif électronique grand public.

11. Procédé selon la revendication 7, 8, 9 ou 10, comprenant en outre le fait de permettre à un serveur proxy de délivrer un contenu au dispositif demandeur.

12. Procédé selon la revendication 7, 8, 9, 10 ou 11, dans lequel le dispositif demandeur est un téléphone mobile.

13. Procédé selon la revendication 8, dans lequel l'interaction comprend la configuration de l'interface utilisateur du dispositif demandeur.

14. Procédé selon une quelconque revendication précédente, dans lequel le dispositif demandeur est un téléphone mobile.

15. Système de fourniture de contenu, comprenant :
un dispositif demandeur de contenu, le dispositif demandeur de contenu demandant un contenu à un dispositif fournisseur de contenu ; et
une interface (API) connectant le dispositif fournisseur de contenu et le dispositif demandeur de contenu, l'interface (API) comprenant une interface programmable d'application de media unifiée, le système étant adapté pour :
recevoir du dispositif demandeur la demande de contenu ;
enregistrer une application à utiliser pendant une session ;
charger des politiques à utiliser pendant la session ;
identifier des caractéristiques matérielles à utiliser pendant la session ;
identifier les données à utiliser pendant une session, les données comprenant le contenu demandé ;
présenter les données au dispositif demandeur de contenu pendant la session, le contenu étant délivré d'un dispositif fournisseur de contenu au dispositif demandeur de contenu selon les politiques et caractéristiques matérielles qui sont disponibles pendant la session, et
permettre au dispositif demandeur d'interagir avec le contenu par le biais de l'interface programmable d'application de media unifiée.
